# EUROPÄISCHE PATENTANMELDUNG

(11) **EP 4 546 644 A1**
(43) Veröffentlichungstag der Anmeldung: **30.04.2025**
(21) Anmeldenummer: 23020484.4
(22) Anmeldetag: 25.10.2023
(51) Int. Cl.: H02S 30/20, F24S 25/00

(54) **PHOTOVOLTAIKVORRICHTUNG ZUR MONTAGE AUF EINEM CONTAINER**

(71) Anmelder: Hartl Energy GmbH, 4310 Mauthausen (AT)
(72) Erfinder: Hartl, Alexander, 4060 Leonding (AT); Hartl, Dominik, 4320 Allerheiligen im Mühlkreis (AT)
(74) Vertreter: SONN Patentanwälte GmbH & Co KG

(57) **Zusammenfassung**

Photovoltaikvorrichtung (1) zur Montage auf einem Container (19), umfassend ein Tragelement (2), an dem wenigstens zwei Photovoltaikmodule (12,13,14) befestigt sind, wobei wenigstens ein Photovoltaikmodul (13,14) relativ zu einem weiteren, vorzugsweise feststehenden, Photovoltaikmodul (12) verschiebbar am Tragelement (2) geführt ist und aus einer sich mit dem weiteren Photovoltaikmodul (12) überdeckenden Aufbewahrungsposition in eine Betriebsposition ausziehbar ist, und wobei das Tragelement (2) ausklapp- oder ausziehbare Arme (6) aufweist, die zur Ankoppelung an die Eckbeschläge (20) des Containers (19) ausgebildet sind.

## Beschreibung

Die Erfindung betrifft eine Photovoltaikvorrichtung zur Montage auf einem Container.

Die Erfindung betrifft weiters einen Container, auf dessen Dach eine Photovoltaikvorrichtung befestigt ist.

Für die Stromversorgung von temporären Behausungen z.B. auf Baustellen werden meist mobile oder stationäre Stromerzeugungsaggregate, insbesondere Dieselaggregate eingesetzt. Solche Stromerzeugungsaggregate ermöglichen ein autonomes bzw. netzunabhängiges Betreiben verschiedener Stromverbraucher in oder in der Umgebung von temporären Behausungen. Nachteilig ist jedoch, dass mit fossilen Energieträgern betriebene Stromerzeugungsaggregate als umweltschädlich betrachtet werden.

Zur autarken elektrischen Energieversorgung sind bereits Versorgungseinrichtungen bekannt geworden, die über wenigstens einen mit regenerativer Energie betriebenen Energiewandler verfügen. Häufig kommen hierbei Photovoltaikmodule zum Einsatz. Es ist bekannt, Photovoltaikmodule auf Dächern verschiedener Bauwerke, wie z.B. Wohnhäusern, Industriegebäuden und dgl. anzuordnen.

Als temporäre Behausungen werden oft Container eingesetzt, die einfach transportierbar sind, modulweise zusammengesetzt werden können und standardisierte Abmessungen aufweisen. Insbesondere werden sog. ISO-Container verwendet, die ursprünglich für Warentransporte Verbreitung gefunden haben. ISO-Container werden häufig aber auch als Baustellencontainer oder als Bürocontainer eingesetzt.

Aus der US 2017/0222598 A1 ist ein Container zur Verwendung als Behausung bekannt geworden, dessen Dach mit Solarpaneelen ausgestattet ist.

### Bei bisherigen Vorschlägen zur Anordnung von

Photovoltaikmodulen auf Containern sind die Module meist fest mit einer Containerwand oder dem Containerdach verbunden oder bilden das Dach aus. Hierbei ist nicht vorgesehen, dass die Photovoltaikmodule bei Bedarf wieder abgenommen werden können. Bei Containern, die der mobilen und/oder temporären Behausung dienen, wie z.B. bei Baustellencontainern oder Bürocontainern, besteht die Anforderung, die Container nur bei Bedarf mit Photovoltaikmodulen auszustatten. Dies erhöht die Flexibilität bei der Einsetzbarkeit von Containern, die für vielfältige Einsatzzwecke geeignet sind, von denen nur manche für die Ausstattung mit Photovoltaikmodulen in Frage kommt.

Die vorliegende Erfindung zielt daher darauf ab, ein System zu schaffen, mit dem Containerdächer nur bei Bedarf auf einfache und flexible Weise mit Photovoltaikmodulen ausgestattet werden können. Insbesondere zielt die Erfindung darauf ab, eine Photovoltaikanlage bereitzustellen, welche standardisiert auf Containerdächern montiert und gleichzeitig platzsparend transportiert werden kann.

Zur Lösung dieser Aufgabe stellt die Erfindung gemäß einem ersten Aspekt eine Photovoltaikvorrichtung zur Montage auf einem Container bereit, umfassend ein Tragelement, an dem wenigstens zwei Photovoltaikmodule befestigt sind, wobei wenigstens ein Photovoltaikmodul relativ zu einem weiteren, vorzugsweise feststehenden, Photovoltaikmodul verschiebbar am Tragelement geführt ist und aus einer sich mit dem weiteren Photovoltaikmodul überdeckenden Aufbewahrungsposition in eine Betriebsposition ausziehbar ist, und wobei das Tragelement ausklapp- oder ausziehbare Arme aufweist, die zur Ankoppelung an die Eckbeschläge des Containers ausgebildet sind.

Die Erfindung beruht somit auf der Idee, wenigstens zwei Photovoltaikmodule in einer einander überdeckenden Aufbewahrungsposition auf einem Tragelement anzuordnen, um den Platzbedarf für die Lagerung und den Transport der Photovoltaikvorrichtung zu minimieren. Für den Einsatz auf einem Containerdach ist wenigstens eines der Photovoltaikmodule verschiebbar gelagert, um in eine Betriebsposition ausgezogen zu werden, in der sich die Photovoltaikmodule nicht mehr überdecken und somit vollflächig für die Energieerzeugung genutzt werden können. Im ausgezogenen Zustand können die Photovoltaikmodule im Wesentlichen die gesamte Fläche des Containerdaches abdecken.

Die Befestigung der erfindungsgemäßen Photovoltaikvorrichtung erfolgt mithilfe von ausklapp- oder ausziehbaren Armen, die im ausgeklappten bzw. ausgezogenen Zustand zur Ankoppelung an die Eckbeschläge des Containers ausgebildet sind. Im eingeklappten bzw. eingezogenen Zustand sind die Arme so angeordnet, dass sie möglichst innerhalb des Umrisses der Photovoltaikmodule in deren Aufbewahrungsposition angeordnet sind, oder möglichst geringfügig über den Umriss vorragen.

Für die Montage der Photovoltaikvorrichtung auf einem Containerdach kann diese mit ausgeklappten oder ausgezogenen Armen beispielsweise von einer Hebevorrichtung auf das Containerdach abgelegt und an die Eckbeschläge des Containers gekoppelt werden. Auf ebenso einfache Weise kann die erfindungsgemäße Photovoltaikvorrichtung vom Containerdach wieder abgenommen werden, indem die Arme von den Eckbeschlägen gelöst und die Photovoltaikvorrichtung mit einer Hebevorrichtung vom Containerdach gehoben wird.

Die Erfindung ermöglicht auf Grund des einfachen Auf- und Abbaus und der platzsparenden Gestaltung den flexiblen Einsatz von Photovoltaikmodulen auf Containerdächern. Die Container und die erfindungsgemäßen Photovoltaikvorrichtungen können hierbei getrennt voneinander an einen Einsatzort gebracht und die Container je nach Bedarf mit einer Photovoltaikvorrichtung versehen werden.

In einer bevorzugten Ausbildung sind drei Photovoltaikmodule am Tragelement befestigt, wobei ein erstes Photovoltaikmodul als feststehendes Photovoltaikmodul ausgebildet ist und ein zweites und ein drittes Photovoltaikmodul aus einer sich mit dem ersten Photovoltaikmodul überdeckenden

Aufbewahrungsposition in entgegengesetzte Richtungen in eine jeweilige Betriebsposition ausziehbar sind.

### Dabei ist das erste Photovoltaikmodul in der

Aufbewahrungsposition des zweiten und dritten Photovoltaikmoduls bevorzugt zwischen diesen angeordnet. Mit anderen Worten ist das zweite Photovoltaikmodul oberhalb und das dritte Photovoltaikmodul unterhalb des feststehenden Photovoltaikmoduls angeordnet.

Für die konstruktive Realisierung der Ausziehbarkeit des oder der Photovoltaikmodule umfasst das Tragelement vorzugsweise eine Schienenführung.

Eine Minimierung des für die Aufbewahrung und den Transport erforderlichen Platzbedarfs wird bevorzugt dadurch erreicht, dass sich die Photovoltaikmodule in der Aufbewahrungsposition vollständig überdecken. Die Photovoltaikmodule sind in der Aufbewahrungsposition somit übereinander angeordnet und weisen dieselbe Größe auf. Bevorzugt handelt es sich um rechteckige Photovoltaikmodule.

Das Tragelement ist vorzugsweise derart ausgebildet, dass es im eingeklappten bzw. eingeschobenen Zustand der Arme nicht oder nur geringfügig über den Umriss der einander überdeckenden Photovoltaikmodule vorragt. Insbesondere beträgt die Fläche des Tragelements in einer Normalprojektion auf die Auflagefläche des Tragelements, wie z.B. das Containerdach nicht mehr als das 1,6-fache, vorzugsweise das 1,4-fache, der Fläche der einander überdeckenden Photovoltaikmodule.

Für die Anbringung auf dem Dach eines 10-Fuß-Containers, dessen Außenabmessungen 2.991 x 2.438 x 2.591 mm (L x B x H) betragen, liegen die Abmessungen jedes Photovoltaikmoduls vorzugsweise im Bereich von 2.000 x 1.000 bis 2.500 x 1.300 (L x B), insbesondere 2.200 x 1.100 bis 2.300 x 1.200 (L x B). Die Fläche des Tragelements in einer Normalprojektion auf seine Auflagefläche, wie z.B. das Containerdach, liegt vorzugsweise im Bereich von 2.400 x 1.300 bis 2.500 x 1.600 (L x B), vorzugsweise 2.400 x 1.300 bis 2.500 x 1.500 (L x B) .

Hinsichtlich der Ausgestaltung der ausklappbaren bzw. ausziehbaren Arme sieht eine bevorzugte Ausbildung der Erfindung vor, dass das Tragelement einen Rahmen mit wenigstens zwei vorzugsweise parallelen Trägern umfasst, wobei an den einander gegenüberliegenden Endbereichen der Träger jeweils ein Arm schwenkbar befestigt ist.

Im Falle der Ausführung der Arme als ausklappbare Arme ist bevorzugt vorgesehen, dass die Arme in eine zur Verschieberichtung des ausziehbaren Photovoltaikmoduls parallele Lage ausklappbar sind.

Um für eine ausreichende Abstützung der Photovoltaikmodule in deren ausgezogener Lage zu sorgen, sieht eine bevorzugte Ausführung vor, dass die Arme jeweils ein ausklappbares Stützelement zur Abstützung des ausziehbaren

Photovoltaikmoduls in dessen Betriebsposition aufweist.

Um eine einfache Montage der erfindungsgemäßen Photovoltaikvorrichtung am Containerdach zu ermöglichen, weisen die ausklapp- oder ausziehbaren Arme an ihrem jeweiligen freien Ende bevorzugt ein Befestigungsstück zur formschlüssigen Verbindung mit dem Eckbeschlag des Containers auf. Die Befestigung am Containerdach erfolgt vorzugsweise nur an den Eckbeschlägen, sodass zusätzliche

Befestigungspunkte entfallen können.

Die Eckbeschläge von Containern sind meist standardisiert ausgeführt, sodass die Befestigungsstücke einheitlich ausgeführt werden können. Weit verbreitet sind bei ISO-Container Eckbeschläge, die für eine sogenannte Twistlock-Verbindung ausgebildet sind. Bei Befestigungsstücken für eine Twistlock-Verbindung wird die formschlüssige Verbindung durch eine Drehung eines Teils des Befestigungsstücks verriegelt. Eine bevorzugte Weiterbildung der Erfindung sieht in diesem Zusammenhang vor, dass das Befestigungsstück ein drehbares Verriegelungsglied aufweist, welches ausgebildet ist, um in eine Öffnung des Eckbeschlags eingeführt zu werden und die Öffnung nach einer Drehung formschlüssig zu hintergreifen. Die Befestigungsstücke können weiters ein Angriffselement für eine Hebevorrichtung, wie z.B. einen Kran aufweisen, sodass der mit der Photovoltaikvorrichtung versehene Container mit der Hebevorrichtung aufgehoben und an einen anderen Ort verbracht werden kann. Die Hebevorrichtung ergreift den Container hierbei an allen vier Befestigungsstücken so wie dies ohne Anordnung der Photovoltaikvorrichtung sonst durch direkte Ankoppelung an die Eckbeschläge der Fall wäre.

Der Container ist bevorzugt als Standard-Container, wie z.B. ISO-Container, wie z.B. als 10' oder 20' (' = Fuß) ISO-Container, ausgebildet.

Zur Umwandlung des von den Photovoltaikmodulen bereitgestellten Gleichstroms in Wechselstrom ist wenigstens ein Wechselrichter am Tragelement vorgesehen. Je nach technischer Auslegung kann für jedes Photovoltaikmodul ein eigener Wechselrichter verwendet werden oder ein Wechselrichter auch für mehrere Photovoltaikmodule vorgesehen sein. Der oder die Wechselrichter kann bzw. können bevorzugt an einem Träger des Tragelements angeordnet sein. Der Ausgang des oder der Wechselrichter ist bevorzugt mit einer Anschlussbox verbunden. Die Anschlussbox kann ebenfalls am Tragelement, insbesondere an einem Träger des Tragelements montiert sein. Von der Anschlussbox können beliebige elektrische Verbraucher mit Wechselstrom versorgt werden. Insbesondere kann der Container, d.h. die im Container angeordneten Verbraucher, mit Wechselstrom versorgt werden. Die Anschlussbox ist mit vorzugsweise standardisierten Steckverbindungen (z.B. CEE Kupplungen) ausgestattet. Der oder die Wechselrichter und die Anschlussbox können in einer Technikbox zusammengefasst werden, die am Tragelement, insbesondere an einem Träger des Tragelements befestigt sein kann.

Der oder die Wechselrichter, die Anschlussbox bzw. die Technikbox kann bzw. können hierbei an einer Querseite des Tragelements angeordnet sein, wobei die Photovoltaikmodule bzw. die Schienenführung für die Photovoltaikmodule auf einer von zwei gegenüberliegenden Seiten auf dem bzw. den Wechselrichtern, der Anschlussbox oder der Technikbox aufliegt bzw. aufliegen, wodurch sich eine Schrägstellung der Photovoltaikmodule ergibt, die einen höheren Stromertrag ermöglicht.

Gemäß einem zweiten Aspekt stellt die Erfindung einen Container bereit, auf dessen Dach eine Photovoltaikvorrichtung gemäß dem ersten Aspekt befestigt ist.

Wie bereits im Zusammenhang mit dem ersten Aspekt der Erfindung erwähnt, erfolgt die Befestigung der Photovoltaikvorrichtung auf dem Containerdach bevorzugt dadurch, dass die ausklapp- oder ausziehbaren Arme der Photovoltaikvorrichtung an Eckbeschlägen des Containers befestigt sind.

Das Befestigungsstück der Arme kann hierbei formschlüssig mit dem jeweiligen Eckbeschlag verbunden sein.

Bevorzugt kann vorgesehen sein, dass die Photovoltaikmodule im ausgezogenen Zustand über den Rand des Containerdachs vorragen, um eine größere Fläche für die Energiegewinnung zu erzielen.

Die Erfindung wird nachfolgend anhand eines in der Zeichnung schematisch dargestellten Ausführungsbeispiels näher erläutert. In dieser zeigen Fig. 1 eine Explosionsdarstellung der erfindungsgemäßen Photovoltaikvorrichtung, Fig. 2 eine erfindungsgemäße Photovoltaikvorrichtung auf einem Containerdach und Fig. 3 eine erfindungsgemäße Photovoltaikvorrichtung in einem Aufbewahrungs- bzw. Transportzustand.

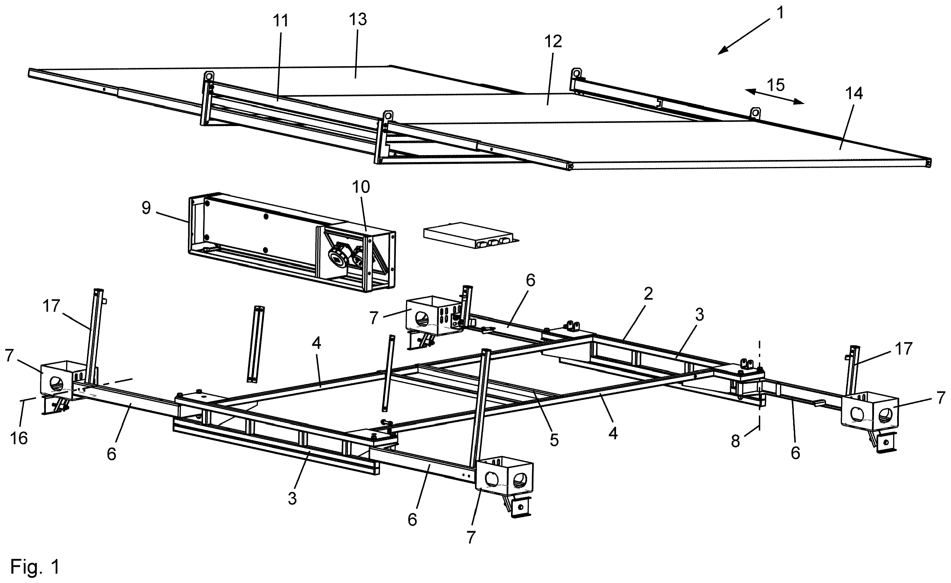

In Fig. 1 ist die Photovoltaikvorrichtung 1 dargestellt, die ein rahmenartiges Tragelement 2 mit zwei parallelen Querträgern 3, einem mittleren Querträger 5 und zwei parallelen Längsträgern 4 aufweist. An den Enden der Querträger 3 ist jeweils ein Arm 6 um eine Schwenkachse 8 schwenkbar befestigt, um von der in Fig. 1 dargestellten ausgeklappten Position in eine zum Längsträger 4 parallele eingeklappte Position verschwenkt zu werden. Am freien Ende jedes Arms 6 ist ein Befestigungsstück 7 zur formschlüssigen Verbindung mit einem Eckbeschlag eines Containers vorgesehen.

An einem der Querträger 3 ist eine Technikbox 9 angeordnet, die eine Anschlussbox 10 sowie wenigstens einen Wechselrichter (nicht dargestellt) beherbergt. Die Anschlussbox 10 ist mit standardisierten Steckverbindungen (z.B. CEE Kupplungen) ausgestattet

Eine Schienenführung 11 für drei Photovoltaikmodule 12, 13 und 14 ist auf der einen Seite auf der Technikbox 10 und auf der anderen Seite auf dem Querträger 3 angeordnet. Die Schienenführung 11 trägt ein feststehendes Photovoltaikmodul 12 sowie zwei in Richtung des Doppelpfeils 15 verschiebbare Photovoltaikmodule 13 und 14, wobei die ausziehbaren Photovoltaikmodule 13 und 14 in Fig. 1 in der ausgezogenen Betriebsposition dargestellt sind. Ausgehend von der in Fig. 1 dargestellten Betriebsposition ist das Photovoltaikmodul 14 in eine oberhalb des Photovoltaikmoduls 12 liegende und dieses überdeckende Aufbewahrungsposition einschiebbar und das Photovoltaikmodul 13 in eine unterhalb des Photovoltaikmoduls 12 liegende und von diesem überdeckte Aufbewahrungsposition einschiebbar. In der ausgezogenen Betriebsposition sind die Photovoltaikmodule 13 und 14 von um eine Achse 16 schwenkbar an den Armen 6 angeordneten Stützelementen 17 abstützbar.

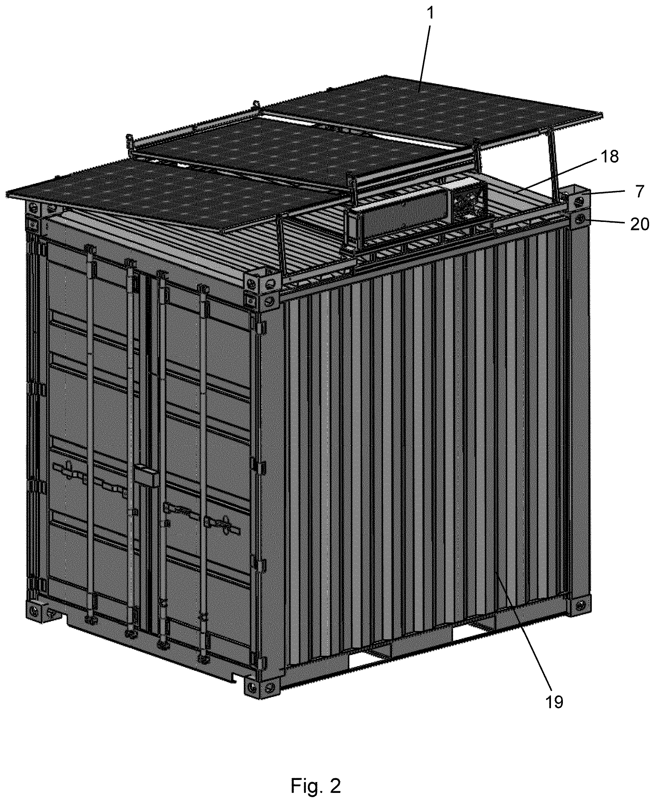

Die Photovoltaikvorrichtung 1 kann grundsätzlich auf jedem beliebigen Untergrund aufgestellt und als mobile PV-Anlage zur Stromversorgung verwendet werden. Eine bevorzugte Verwendung ist in Fig. 2 dargestellt, wobei die Photovoltaikvorrichtung 1 auf dem Dach 18 eines 10-Fuß-Containers 19 befestigt ist. Die Befestigung erfolgt mithilfe der Befestigungsstücke 7 an Eckbeschlägen 20 des Containers 19. Die Befestigungsstücke 7 können hierbei als Twistlock-Verbindungsstücke ausgebildet sein.

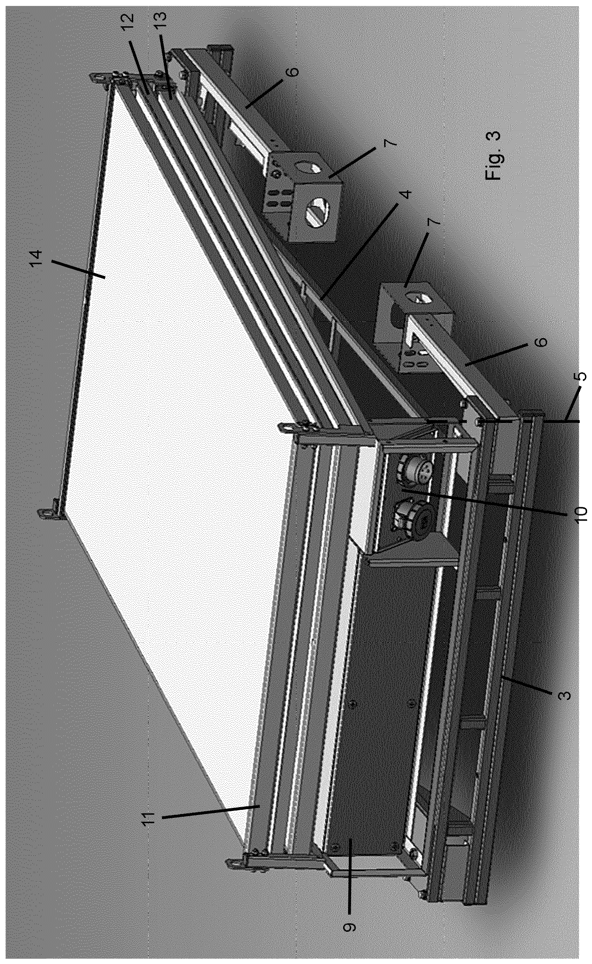

In Fig. 3 ist Photovoltaikvorrichtung 1 im Aufbewahrungs- bzw. Transportzustand dargestellt, wobei die verschiebbaren Photovoltaikmodule 13 und 14 in der eingeschobenen Aufbewahrungsposition dargestellt sind. Dabei liegt das Photovoltaikmodul 14 oberhalb des feststehenden Photovoltaikmoduls 12 und das Photovoltaikmodul 13 unterhalb des feststehenden Photovoltaikmoduls 12. Alle drei Fotovoltaik Module 12, 13 und 14 überdecken einander vollständig und liegen in der Normalprojektion innerhalb des Umrisses des Tragelements 2. Weiters befinden sich die Arme 6 in der eingeklappten, zu den Längsträgern 4 parallelen Position, um den Platzbedarf im Aufbewahrungs- bzw. Transport Zustand zu minimieren.

## Patentansprüche

1. Photovoltaikvorrichtung (1) zur Montage auf einem Container (19), umfassend ein Tragelement (2), an dem wenigstens zwei Photovoltaikmodule (12,13,14) befestigt sind, wobei wenigstens ein Photovoltaikmodul (13,14) relativ zu einem weiteren, vorzugsweise feststehenden, Photovoltaikmodul (12) verschiebbar am Tragelement (2) geführt ist und aus einer sich mit dem weiteren Photovoltaikmodul (12) überdeckenden Aufbewahrungsposition in eine Betriebsposition ausziehbar ist, und wobei das Tragelement (2) ausklapp- oder ausziehbare Arme (6) aufweist, die zur Ankoppelung an die Eckbeschläge (20) des Containers (19) ausgebildet sind.

2. Photovoltaikvorrichtung nach Anspruch 1, **dadurch gekennzeichnet, dass** am Tragelement (2) drei Photovoltaikmodule (12,13,14) befestigt sind, wobei ein erstes Photovoltaikmodul (12) als feststehendes Photovoltaikmodul ausgebildet ist und ein zweites und ein drittes Photovoltaikmodul (13,14) aus einer sich mit dem ersten Photovoltaikmodul (12) überdeckenden Aufbewahrungsposition in entgegengesetzte Richtungen in eine jeweilige Betriebsposition ausziehbar sind.

3. Photovoltaikvorrichtung nach Anspruch 2, **dadurch gekennzeichnet, dass** das erste Photovoltaikmodul (12) in der Aufbewahrungsposition des zweiten und dritten Photovoltaikmoduls (!3,14) zwischen diesen angeordnet ist.

4. Photovoltaikvorrichtung nach Anspruch 1, 2 oder 3, **dadurch gekennzeichnet, dass** sich die Photovoltaikmodule (12,13,14) in der Aufbewahrungsposition vollständig überdecken.

5. Photovoltaikvorrichtung nach einem der Ansprüche 1 bis 4, **dadurch gekennzeichnet, dass** das Tragelement (2) einen Rahmen mit wenigstens zwei vorzugsweise parallelen Trägern (3) umfasst, wobei an den einander gegenüberliegenden Endbereichen der Träger (3) jeweils ein Arm (6) schwenkbar befestigt ist.

6. Photovoltaikvorrichtung nach einem der Ansprüche 1 bis 5, **dadurch gekennzeichnet, dass** die Arme (6) in eine zur Verschieberichtung (15) des ausziehbaren Photovoltaikmoduls (13,14) parallele Lage ausklappbar sind.

7. Photovoltaikvorrichtung nach einem der Ansprüche 1 bis 6, **dadurch gekennzeichnet, dass** die Arme (6) jeweils ein ausklappbares Stützelement (17) zur Abstützung des ausziehbaren Photovoltaikmoduls (13,14) in dessen Betriebsposition aufweist.

8. Photovoltaikvorrichtung nach einem der Ansprüche 1 bis 7, **dadurch gekennzeichnet, dass** die ausklapp- oder ausziehbaren Arme (6) an ihrem jeweiligen freien Ende ein Befestigungsstück (7) zur formschlüssigen Verbindung mit dem Eckbeschlag (20) des Containers (19) aufweisen.

9. Photovoltaikvorrichtung nach Anspruch 8, **dadurch gekennzeichnet, dass** das Befestigungsstück (7) ein drehbares Verriegelungsglied aufweist, welches ausgebildet ist, um in eine Öffnung des Eckbeschlags (20) eingeführt zu werden und die Öffnung nach einer Drehung formschlüssig zu hintergreifen.

10. Photovoltaikvorrichtung nach einem der Ansprüche 1 bis 9, **dadurch gekennzeichnet, dass** wenigstens ein Wechselrichter am Tragelement (2) angeordnet ist.

11. Container, insbesondere 10-Fuß-Container (19), auf dessen Dach (18) eine Photovoltaikvorrichtung (1) nach einem der Ansprüche 1 bis 10 befestigt ist.

12. Container nach Anspruch 11, **dadurch gekennzeichnet, dass** die ausklapp- oder ausziehbaren Arme (6) der Photovoltaikvorrichtung (1) an Eckbeschlägen (20) des Containers (19) befestigt sind.

13. Container nach Anspruch 11 oder 12, **dadurch gekennzeichnet, dass** das Befestigungsstück (7) der Arme (6) formschlüssig mit dem jeweiligen Eckbeschlag (20) verbunden ist.
